(19) Europäisches Patentamt
European Patent Office
Office européen des brevets

(11) **EP 2 619 923 B1**

(12) # FASCICULE DE BREVET EUROPEEN

(45) Date de publication et mention de la délivrance du brevet:
**03.06.2015 Bulletin 2015/23**

(51) Int Cl.:
**H04B 7/06** *(2006.01)*  **H04B 7/08** *(2006.01)*
**H04B 7/04** *(2006.01)*

(21) Numéro de dépôt: **11771246.3**

(22) Date de dépôt: **21.09.2011**

(86) Numéro de dépôt international:
**PCT/FR2011/052177**

(87) Numéro de publication internationale:
**WO 2012/038661 (29.03.2012 Gazette 2012/13)**

(54) **PROCEDE D'EMISSION DOUBLE ITERATIF DE FLUX MULTIPLES PAR UTILISATEUR POUR UN SYSTEME MIMO MULTI UTILISATEURS, EMETTEUR, PRODUIT PROGRAMME D'ORDINATEUR ET SUPPORT D'INFORMATION CORRESPONDANTS**

ITERATIVES VERFAHREN ZUR DOPPELSENDUNG MEHRERER STRÖME PRO BENUTZER FÜR EIN MEHRNUTZER-MIMO-SYSTEM, SENDER, COMPUTERPROGRAMMPRODUKT UND INFORMATIONSMEDIUM DAFÜR

ITERATIVE METHOD OF DUAL SENDING OF MULTIPLE STREAMS PER USER FOR A MULTIUSER MIMO SYSTEM, SENDER, COMPUTER PROGRAM PRODUCT AND INFORMATION MEDIUM CORRESPONDING THERETO

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2010 FR 1057717**

(43) Date de publication de la demande:
**31.07.2013 Bulletin 2013/31**

(73) Titulaire: **Orange**
**75015 Paris (FR)**

(72) Inventeurs:
• **AMARA, Mustapha**
**Sousse 4000 (TN)**
• **YUAN-WU, Julie**
**F-78000 Versailles (FR)**
• **SLOCK, Dirk**
**F-06220 Vallauris (FR)**

(56) Documents cités:
• **CHENGWEN XING ET AL: "Robust Joint Design of Linear Relay Precoder and Destination Equalizer for Dual-Hop Amplify-and-Forward MIMO Relay Systems", IEEE TRANSACTIONS ON SIGNAL PROCESSING, IEEE SERVICE CENTER, NEW YORK, NY, US, vol. 58, no. 4, 1 avril 2010 (2010-04-01), pages 2273-2283, XP011286392, ISSN: 1053-587X, DOI: DOI:10.1109/TSP. 2009.2038961**
• **MUSTAPHA AMARA ET AL: "Optimal MU-MIMO precoder with MISO decomposition approach", SIGNAL PROCESSING ADVANCES IN WIRELESS COMMUNICATIONS (SPAWC), 2010 IEEE ELEVENTH INTERNATIONAL WORKSHOP ON, IEEE, PISCATAWAY, NJ, USA, 20 juin 2010 (2010-06-20), pages 1-5, XP031837283, ISBN: 978-1-4244-6990-1**
• **HAKJEA SUNG ET AL: "Linear precoder designs for K-user interference channels", IEEE TRANSACTIONS ON WIRELESS COMMUNICATIONS, IEEE SERVICE CENTER, PISCATAWAY, NJ, US, vol. 9, no. 1, 1 janvier 2010 (2010-01-01), pages 291-301, XP011287347, ISSN: 1536-1276, DOI: DOI:10.1109/TWC. 2010.01.090221**

- **SHENG LIU ET AL: "A new joint iterative transceiver design with interference alignment method", WIRELESS AND OPTICAL COMMUNICATIONS CONFERENCE (WOCC), 2010 19TH ANNUAL, IEEE, PISCATAWAY, NJ, USA, 14 mai 2010 (2010-05-14), pages 1-5, XP031709484, ISBN: 978-1-4244-7597-1**
- **MUSTAPHA AMARA ET AL: "Receiver and transmitter iterative optimization using maximum sum-rate criterion for Multi-User MIMO systems", COMMUNICATIONS, CONTROL AND SIGNAL PROCESSING (ISCCSP), 2010 4TH INTERNATIONAL SYMPOSIUM ON, IEEE, PISCATAWAY, NJ, USA, 3 mars 2010 (2010-03-03), pages 1-6, XP031675687, ISBN: 978-1-4244-6285-8**

**Description**

**Domaine de l'invention**

La présente invention se rapporte au domaine des télécommunications. Au sein de ce domaine, l'invention se rapporte plus particulièrement aux communications dites numériques. Les communications numériques comprennent en particulier les communications sans fil ; elles comprennent aussi par exemple les communications filaires. Le support de transmission des communications est couramment appelé canal de transmission ou de propagation, à l'origine en référence à un canal aérien et par extension en référence à tout canal.

L'invention concerne les techniques d'émission et de réception dans un système multi antennes multi flux. Elle s'applique essentiellement aux communications sur voie descendante et plus particulièrement d'une station de base vers plusieurs terminaux. Dans ce cas, le canal de transmission est dit canal de diffusion.

Un flux de données est associé à un utilisateur. Les flux des différents utilisateurs sont par exemple relatifs à un même service de télécommunication et/ou à différents services (par exemple voix, data, vidéo).

**Art antérieur**

Les systèmes de communication numérique multi antennes couramment désignés par l'acronyme MIMO (acronyme des termes anglosaxons Multiple Input Multiple Output pour "Entrées Multiples Sorties Multiples") englobent tous les systèmes qui comportent plusieurs antennes à l'émission et généralement plusieurs antennes à la réception. Un système MIMO avec une seule antenne de réception est aussi désigné par l'acronyme MISO (acronyme des termes anglosaxons Multiple Input Single Output).

Ces systèmes répondent à la demande toujours croissante de fourniture de services de télécommunication variés à des débits toujours supérieurs aux offres existantes. En effet, on a prouvé que la capacité des canaux MIMO augmente proportionnellement avec le nombre minimal des antennes en émission et en réception.

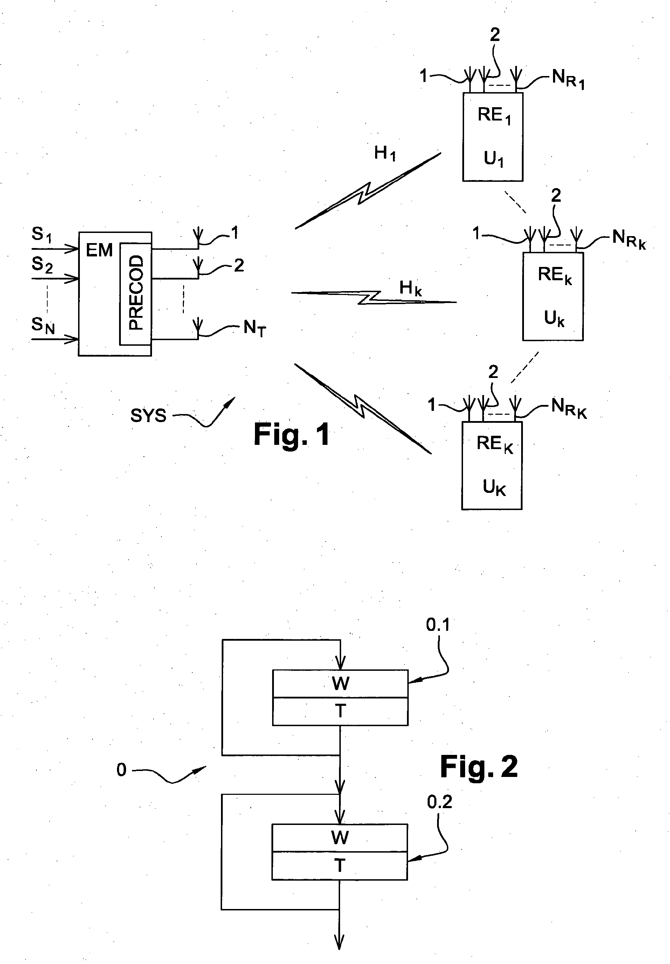

Un exemple d'un tel système est illustré par le schéma de la figure 1. Le système comprend une station de base avec $N_T$ antennes de transmission et $K$ mobiles avec $N_{R_k}$ antennes de réception pour l'utilisateur $k$ associé au mobile $k$. Le canal de transmission est pour l'utilisateur $k$ modélisé par une matrice $\mathbf{H}_k$ de taille $N_{R_k} \times N_T$ qui représente l'impacte du canal de transmission entre les antennes à l'émission et les antennes à la réception. Chaque composante de la matrice est une variable aléatoire de moyenne nulle et de variance considérée égale à 1.

L'invention se place dans un contexte de canal à évanouissements lents de Rayleigh par utilisateur avec indépendance totale entre les différents canaux des différents utilisateurs.. Le contexte de canal à évanouissements lents de Rayleigh par utilisateur avec indépendance totale entre les différents canaux des différents utilisateurs correspond typiquement à une propagation en milieu urbain, c'est-à-dire à trajets multiples.

L'invention se place dans un contexte de diffusion, au sens de la théorie de l'information, c'est-à-dire dans un contexte de transmission de différents flux pour différents utilisateurs à partir d'un émetteur. En outre, cet émetteur a une connaissance parfaite du canal de transmission. Ceci implique une estimation parfaite de toutes les composantes des matrices $\mathbf{H}_k$ de tous les utilisateurs puisqu'on est dans un canal de diffusion ainsi que l'invariance du canal de transmission entre le moment où est effectuée l'estimation du canal à la réception et le moment où cette estimation est exploitée à l'émission.

Dans un système MIMO multi utilisateurs multiflux, les flux des différents utilisateurs sont transmis simultanément de la station de base aux récepteurs des utilisateurs sachant que plusieurs flux peuvent être transmis à un même utilisateur à un instant donné mais qu'à un autre instant donné cet utilisateur peut ne recevoir qu'un seul flux ou pas de flux du tout.

Le nombre maximal de flux par utilisateur est de $Q_k = min(N_{R_k}, N_T)$ et le nombre total de flux pouvant être émis simultanément par le système MIMO à chaque instant ne doit pas dépasser le nombre maximal Q de flux pouvant être servis par le système :

$$Q = \min(\sum_{k=1}^{K} N_{\dot{R}_k}, N_T) .$$

Dans le cas d'un système MU-MIMO, les précodeurs constituent la brique de base définissant les performances du système de communication. En effet, les pré-codeurs permettent de séparer les flux des différents utilisateurs afin de minimiser les interférences inter utilisateurs à la réception et d'améliorer par conséquence le débit véhiculé. Les performances pour un tel système sont déterminées par la quantité de flux de données qu'il peut servir vers les différents utilisateurs appelé débit somme noté $SR,$ Sum-Rate selon la terminologie anglosaxonne.

Le maximum du débit total $SR$ pouvant être véhiculé par un système MIMO vers tous les utilisateurs a été définie par la théorie de l'information comme la capacité ergodique du système.

L'optimisation du débit total se base sur l'optimisation conjointe de l'émetteur et du récepteur afin de trouver la combinaison qui minimise le MSE (abréviations des termes anglosaxons Mean Square Error). En effet, il ne suffit pas de se pencher sur l'optimisation du précodeur en négligeant ce qui se passe au niveau de la réception et vice versa, l'optimisation du récepteur tout seul n'est pas suffisante pour extraire le *SR* maximal. De plus, dans un système MIMO avec antennes multiples à la réception, plusieurs flux de données peuvent être transmis à un même utilisateur. Ceci augmente la difficulté de détermination de la meilleure manière d'affecter les flux aux utilisateurs ainsi que les puissances respectives à leur attribuer.

Les techniques connues pour des systèmes MIMO multi utilisateurs sont basées sur des critères tels que le MMSE (acronyme des termes anglosaxons Minimum Mean Square Error) et le SLNR (acronyme des termes anglosaxons Signal to Leakage and Noise Ratio) qui permettent d'effectuer une optimisation du système.

Certaines analyses théoriques ont démontré que la capacité du canal de diffusion MU-MIMO (abréviation de Multi Utilisateurs MIMO) peut être atteinte à l'aide de l'algorithme DPC (acronyme des termes anglosaxons Dirty Paper Coding) [3,4]. Cependant, un précodage DPC reste, malgré les grandes avancées des calculateurs, un algorithme très difficile à mettre en place à cause de la puissance de calcul requise.

Ainsi, des solutions sous optimales de précodeurs linéaires avec une faible complexité ont vu le jour.

Une première catégorie de précodeurs linéaires met en oeuvre des algorithmes dits linéaires non itératifs appelés aussi directs (ou CF selon les abréviations des termes anglosaxons Closed Form) décrits par exemple par [1, 6, 7]. Ces algorithmes déterminent pour chaque flux un couple de vecteurs d'émission et de réception. Les couples de vecteurs relatifs à tous les utilisateurs sont calculés par la station de base. La station de base informe les utilisateurs de leurs vecteurs de réception en utilisant typiquement un canal de signalisation. La station de base émet l'information de chaque flux en utilisant le vecteur d'émission correspondant. Tous les flux sont transmis en même temps. A la réception, chaque récepteur associé à un utilisateur utilise le vecteur de réception communiqué par la station de base pour combiner les signaux reçus sur les différentes antennes et extraire les échantillons correspondant au flux de l'utilisateur.

Une deuxième catégorie de précodeurs linéaires met en oeuvre des algorithmes itératifs dont certaines réalisations sont décrites par [2, 5, 8]

[8] décrit un précodeur itératif à base d'un WMMSE (Weighted Minimum Mean Square Error). En considérant une matrice $\mathbf{W}$ de poids pour les différents flux de tous les utilisateurs (autrement dit $\mathbf{W} = \{\mathbf{W}_1,....,\mathbf{W}_K\}$) et l'ensemble des récepteurs $\mathbf{D} = diag\{\mathbf{D}_1,...,\mathbf{D}_K\}$ utilisés par les différents utilisateurs alors le précodeur WMMSE correspondant est donné par :

$$\mathbf{T} = diag\left\{\mathbf{T}_1, \cdots, \mathbf{T}_K\right\} = \beta\left(\mathbf{H}^H\mathbf{D}^H\mathbf{W}\mathbf{D}\mathbf{H} + \frac{tr(\mathbf{W}\mathbf{D}\mathbf{D}^H)}{P_T}\mathbf{I}_{N_T}\right)^{-1}\mathbf{H}^H\mathbf{D}^H\mathbf{W} \qquad (1.1)$$

Soit pour le précodeur correspondant à l'utilisateur k :

$$\mathbf{T}_k = \beta\left(\sum_{j=1}^{K}\mathbf{H}_j^H\mathbf{D}_j^H\mathbf{W}_j\mathbf{D}_j\mathbf{H}_j + \frac{1}{P_T}tr(\mathbf{W}_j\mathbf{D}_j\mathbf{D}_j^H)\mathbf{I}_{N_T}\right)^{-1}\mathbf{H}_k^H\mathbf{D}_k^H\mathbf{W}_k$$

où $\beta$ est un facteur scalaire pour respecter la contrainte de puissance $\sum_{i=1}^{K}tr\left(\mathbf{T}_i\mathbf{T}_i^H\right) = P_T$.

Ce précodeur dépend des poids $\mathbf{W}$ affectés aux différents flux ainsi que des décodeurs $\mathbf{D}_k, k \in \{1, \cdots, K\}$ destinés aux utilisateurs ce qui implique l'obligation d'utiliser un procédé itératif pour les optimiser.

L'optimisation nécessite donc de définir les récepteurs. Parmi les différents types de récepteurs qui existent, [8] propose le récepteur MMSE (Minimum Mean Square Error). L'expression analytique du récepteur MMSE est la suivante :

$$\mathbf{D}_k = \mathbf{T}_k^H \mathbf{H}_k^H \left( \mathbf{H}_k \mathbf{T}_k \mathbf{T}_k^H \mathbf{H}_k^H + \mathbf{I}_{N_{R_k}} + \sum_{i=1, i \neq k}^{K} \mathbf{H}_k \mathbf{T}_i \mathbf{T}_i^H \mathbf{H}_k^H \right)^{-1} \quad\quad (1.3)$$

En suite, il faut définir les poids à affecter à chacun des flux. Cette distribution doit être inversement proportionnelle à l'erreur quadratique moyenne MSE (Mean Square Error). Elle est déterminée par l'expression (1.4) comme étant l'inverse de la matrice de l'erreur quadratique moyenne calculée pour chaque utilisateur.

$$\mathbf{W}_k = \left( \mathbf{I}_k + \mathbf{T}_k^H \mathbf{H}_k^H \left( \mathbf{I}_{N_{R_k}} + \sum_{i=1, i \neq k}^{K} \mathbf{H}_k \mathbf{T}_i \mathbf{T}_i^H \mathbf{H}_k^H \right)^{-1} \mathbf{H}_k \mathbf{T}_k \right) \quad\quad (1.4)$$

Le procédé décrit dans [8] est le suivant :

1. Initialiser les précodeurs $\mathbf{T}_k, k \in \{1, \cdots, K\}$
2. Calculer selon la relation (1.3) les décodeurs MMSE correspondant aux précodeurs $\mathbf{T}_k$ pour chaque utilisateur.
3. Calculer la nouvelle distribution des poids minimisant le MSE donnée par la formule (1.4)
4. Recalculer les nouveaux précodeurs en appliquant (1.1)
5. Reprendre les étapes 2. à 4. jusqu'à la convergence.

Pour analyser les performances du système ainsi obtenu, on se base sur la valeur du débit total du système qui est la somme des débits *SR* offerts aux différents utilisateurs :

$$SR = \sum_{k=1}^{K} \log_2 \left( \mathbf{I} + \frac{\mathbf{H}_k \mathbf{T}_k \mathbf{T}_k^H \mathbf{H}_k^H}{\mathbf{\Gamma}_k + N_0 \mathbf{I}} \right) \quad\quad (1.5)$$

Où le terme $\mathbf{\Gamma}_k = \mathbf{H}_k \sum_{j=1, j \neq k}^{K} \mathbf{T}_j \mathbf{T}_j^H \mathbf{H}_k^H$ représente l'interférence générée par les autres utilisateurs et captés par l'utilisateur *k*.

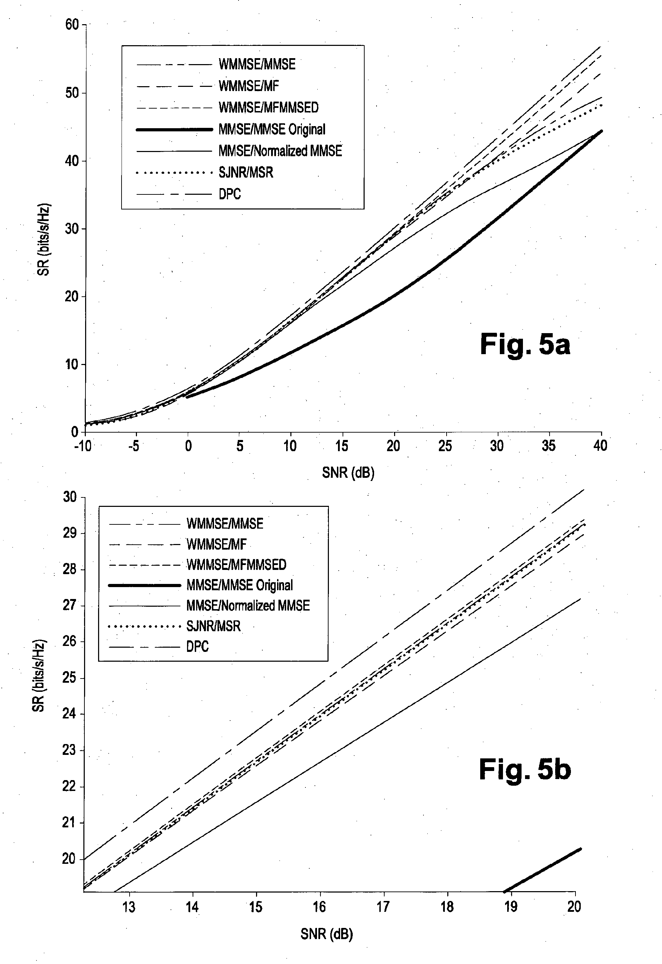

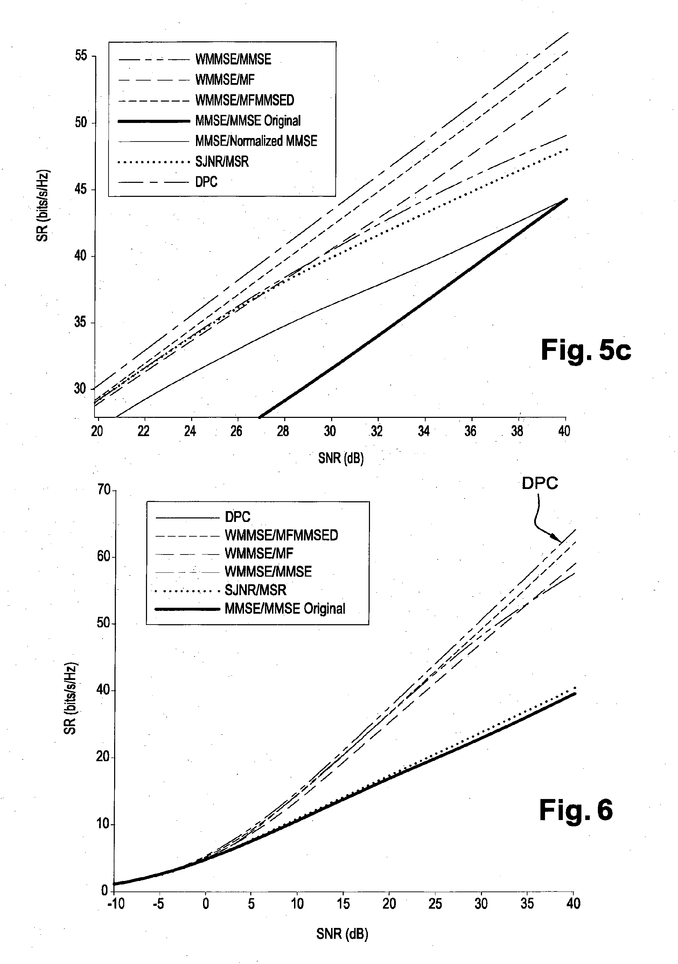

Ce procédé présente une saturation à haut rapport signal à bruit SNR avec une variation de la pente de la courbe comme illustrée par la figure 5. Ce problème de saturation se rajoute à un problème de convergence connu pour les solutions itératives simples.

La relation (1.1) pour le calcul du précodeur est une fonction directe des décodeurs utilisés par les différents utilisateurs. Le choix des décodeurs a de ce fait un impact direct sur les performances du système obtenu avec [8] mais il n'existe pas de décodeur qui permette d'obtenir des gains pour tout rapport signal à bruit SNR.

Une solution consiste à appliquer plusieurs algorithmes avec différents décodeurs et de choisir le meilleur mais ceci a pour inconvénients d'augmenter énormément la complexité et la consommation de ressources de calcul sans toutefois garantir l'obtention des meilleures performances.

Le document "Robust Joint Design of Linear Relay Precoder and Destination Equalizer for Dual-Hop Amplify-and-Forward MIMO Relay Systems" décrit un procédé itératif de calcul de K matrices de précodage et K matrices de décodage.

Exposé de l'invention

L'invention propose une technique d'émission et une technique de réception pour un système MIMO multi utilisateurs multiflux permettant d'améliorer l'optimisation du système connu pour une meilleure maximisation des débits de transmission du système définies par les revendications indépendantes. Le système MIMO multi utilisateurs multiflux comprend $N_T$ antennes d'émission et $\sum_{k=1}^{K} N_{R_k}$ antennes de réception associées à *K* récepteurs associés respectivement à *K* utilisateurs. Le système MIMO comprend un émetteur qui met en oeuvre un procédé d'émission multiflux de *N* ($N \leq Q$) flux de données alloués respectivement à *K* utilisateurs différents selon l'invention.

Le procédé d'émission multiflux selon l'invention est particulièrement remarquable en ce qu'il comprend :

- la succession de deux algorithmes itératifs différents de calcul de $K$ matrices de précodage d'un précodeur linéaire et de $K$ matrices de décodage d'un récepteur, ce récepteur étant de type MF normalisé avec une norme de Frobenius pour le premier algorithme, le deuxième algorithme itératif étant initialisé par une valeur de sortie du premier algorithme itératif,
- avant chaque calcul des matrices de précodage, un calcul de poids pour pondérer tous les flux.

Les algorithmes itératifs ne présentent pas tous les mêmes particularités. Les inventeurs ont observés que, contre toute attente, la cascade de deux algorithmes itératifs de type différent permet d'améliorer le débit total atteint comparativement à celui atteint avec un seul algorithme itératif sans pour autant augmenter globalement le nombre d'itérations. Cette cascade a la particularité de diminuer l'impact des maximas locaux sur le processus de convergence et d'augmenter par voie de conséquence la convergence du deuxième algorithme itératif vers un maximum absolu. En effet, la valeur d'initialisation du deuxième algorithme est obtenue à l'issue de plusieurs itérations du premier algorithme itératif et non plus de manière arbitraire. Ainsi, la détermination de la valeur d'initialisation prend en compte les conditions opérationnelles du système MIMO (canal de transmission, bruit (SNR), nombre d'antennes) contrairement à un choix arbitraire.

Le basculement du premier algorithme au deuxième algorithme est effectué de façon dynamique selon un test de sortie basé sur un seuil de variation du débit atteint sur une fenêtre donnée d'itérations. De manière alternative, il peut être fixé un nombre maximal d'itérations. Ce test assure que la valeur des matrices initiales utilisées par le deuxième algorithme prend suffisamment en compte les variations des conditions opérationnelles ; le nombre d'itérations du premier algorithme est donc variable en fonction de ces conditions opérationnelles.

Typiquement, le premier algorithme itératif est choisi comme présentant une variation non stable du débit total et le deuxième algorithme est choisi comme présentant une variation strictement croissante du débit total.

Plus particulièrement, le premier algorithme et le deuxième algorithme prennent en compte un type de précodage linéaire dit WMMSE qui minimise une erreur quadratique moyenne et qui permet de traiter du multiflux.

Selon un mode particulier, le premier algorithme prend en compte un premier type de récepteur dit MF normalisé par la norme de Frobenius et le deuxième algorithme prend en compte un deuxième type de récepteur dit MMSE. Ce choix est particulièrement avantageux car le récepteur de type MF (Matched Filter) permet d'obtenir des performances optimales à très hauts SNR alors que le récepteur de type MMSE possède de bon résultats à bas SNR, ce qui permet d'obtenir une solution polyvalente.

L'invention permet donc de contourner les problèmes des maximas locaux par la combinaison des solutions itératives basées sur différents récepteurs en exploitant leurs différents points forts et, par conséquent, d'améliorer la valeur du débit total $SR$ du système.

L'invention peut en outre être exprimée sous la forme plus détaillée d'un procédé d'émission multiflux de $N$ flux de données alloués respectivement à $K$ utilisateurs différents, mis en oeuvre par un émetteur destiné à un système MIMO multi utilisateurs à $N_T$ antennes d'émission et $\sum_{k=1}^{K} N_{R_k}$ antennes de réception associées à $K$ récepteurs associés respectivement à $K$ utilisateurs. Le procédé comprend :

- une initialisation de matrices de précodage selon un précodage linéaire d'un premier type (MF),
- de manière itérative avec un minimum de $WIN_{MF}$ itérations, un calcul, prenant initialement en compte les matrices de précodage initialisé, de matrices de décodage selon un premier type de récepteur, de type MF normalisé avec une norme de Frobenius, un calcul de poids pour tous les flux pour pondérer le calcul suivant des matrices de précodage et un calcul des matrices de précodage selon un précodage linéaire d'un second type (WMMSE) en tenant compte des poids, avec un test de sortie des itérations basé sur un seuil de variations du débit atteint sur les dernières $WIN_{MF}$ itérations ou basé sur un nombre maximal d'itérations,

- une sélection de $K$ matrices de précodage calculées sur une même itération offrant le meilleur débit total parmi les matrices de précodage calculées sur la fenêtre $WIN_{MF}$,
- de manière itérative, un calcul des matrices de décodage selon un deuxième type de récepteur (MMSE) différent du premier prenant initialement en compte les matrices de précodage sélectionnées, un calcul de poids pour tous les flux pour optimiser le calcul suivant des matrices de précodage et un calcul de matrices de précodage selon le précodage linéaire du second type (WMMSE) en tenant compte des poids, avec un test de sortie du calcul itératif basé sur un seuil de variations du débit entre itérations successives ou basé sur un nombre maximal d'itérations,
- l'émission des $K$ dernières matrices de décodage calculées à destination respectivement *des* $K$ récepteurs recevant les *N* flux,

- le précodage des *N* flux par les *K* dernières matrices de précodage calculées.

L'invention a en outre pour objet un émetteur multiflux adapté pour un système multi utilisateurs MIMO de télécommunication comprenant $N_T$ antennes d'émission destinées à être connectées à l'émetteur, $\sum_{k=1}^{K} N_{R_k}$ antennes de réception et *K* récepteurs associés respectivement à *K* utilisateurs et connectés respectivement à $N_{R_k}$ parmi les $\sum_{k=1}^{K} N_{R_k}$ antennes de réception, pour émettre simultanément *N* flux de données alloués respectivement aux *K* utilisateurs. L'émetteur comprend :

- *K* pré-codeurs linéaires de matrices d'émission $\mathbf{T}_k$ pour générer *K* vecteurs intermédiaires de taille $N_T{\times}1$,
- par pré-codeur, un moyen de calcul (CALCOD) adapté pour :

  ○ de manière itérative avec un minimum de $WIN_{MF}$ itérations, calculer une matrice de décodage selon un premier type de récepteur, de type MF normalisé avec une norme de Frobenius, calculer des poids pour tous les flux pour pondérer le calcul suivant dese matrices de précodage et calculer des matrices de précodage selon un précodage linéaire d'un second type (WMMSE) en tenant compte des poids, avec un test de sortie des itérations basé sur un seuil de variations du débit atteint sur les dernières $WIN_{MF}$ itérations ou basé sur un nombre maximal d'itérations,
  ○ sélectionner K matrices de précodage calculées sur une même itération offrant le meilleur débit total parmi les matrices de précodage calculées sur la fenêtre $WIN_{MF}$,
  ○ de manière itérative, calculer des matrices de décodage selon un deuxième type de récepteur (MMSE) différent du premier prenant initialement en compte les matrices de précodage sélectionnées, calculer des poids pour tous les flux pour pondérer le calcul suivant des matrices de précodage et calculer des matrices de précodage selon le précodage linéaire du second type (WMMSE) en tenant compte des poids, avec un test de sortie du calcul itératif basé sur un seuil de variations du débit entre itérations successives ou basé sur un nombre maximal d'itérations ,

- les *K* matrices d'émission des *K* pré-codeurs linéaires étant égales aux *K* dernières matrices de précodage calculées,
- $N_T$ additionneurs pour additionner les *K* vecteurs $\mathbf{T}_k\mathbf{s}_k$ intermédiaires pour générer un vecteur d'alimentation des $N_T$ antennes,
- un moyen d'émission des *K* dernières matrices de décodage calculées à destination *des K* récepteurs.

L'invention a en outre pour objet un système multi utilisateurs MIMO de télécommunication comprenant un émetteur adapté selon l'invention, $N_T$ antennes d'émission connectées à l'émetteur, $\sum_{k=1}^{K} N_{R_k}$ antennes de réception et *K* récepteurs adaptés associés respectivement à *K* utilisateurs et connectés respectivement à $N_{R_k}$ parmi les $\sum_{k=1}^{K} N_{R_k}$ antennes de réception. Chaque récepteur *k* comprend :

- un moyen de réception de la matrice de décodage de flux,
- un décodeur linéaire adapté pour extraire les flux servis pour l'utilisateur *k* parmi les *N* flux au moyen de la matrice de décodage.

Selon un mode de réalisation, chaque récepteur comprend un moyen pour estimer la matrice $\mathbf{H}_k$ du canal de propagation.
Selon une implémentation préférée, les étapes du procédé d'émission multiflux sont déterminées par les instructions d'un programme d'émission incorporé dans un circuit électronique telle une puce elle-même pouvant être disposée dans un dispositif électronique tel un émetteur. Le procédé d'émission selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront lors de la description qui suit de modes de réalisation donnés à titre d'exemples non limitatifs, description faite en regard des figures annexées suivantes.

La figure 1 est un schéma d'un système MIMO linéaire multiflux multi utilisateurs selon l'art antérieur.

La figure 2 est un organigramme d'un procédé selon l'invention.

La figure 3 est un schéma détaillé du pré-codage des $\mathbf{s}_1$ ,..., $\mathbf{s}_K$ vecteurs contenant les $N$ flux $S_1,...,S_N$ de données selon l'invention.

La figure 4 est un organigramme détaillé d'un mode de réalisation d'un procédé selon l'invention.

Les figures 5 et 6 représentent sous forme de courbes des résultats de simulation donnant une moyenne du débit total faite sur les réalisations du canal de transmission, en fonction d'un niveau de puissance totale émise qui impacte directement à la réception le rapport signal à bruit, pour un système MIMO multi utilisateurs multi flux mettant en oeuvre trois algorithmes différents.

Les figures 5b et 5c sont des loupes de la figure 5a.

**Description de modes de réalisation de l'invention**

Le schéma de la figure 1 représente un système MIMO linéaire multi utilisateurs multiflux selon l'art antérieur. Le système SYS comprend un émetteur avec un pré-codeur PRECOD formé de $K$ pré-codeurs, côté station de base, et $K$ récepteurs côtés utilisateurs qui ont tous une structure linéaire. L'émetteur est relié à $N_T$ antennes d'émission. Le récepteur de *l'utilisateur k* est relié à $N_{R_k}$ antennes de réception. Le canal de diffusion de l'émetteur aux récepteurs est représenté par $K$ canaux de transmission de matrice $\mathbf{H}_k$.

Le schéma de la figure 2 représente un organigramme d'un procédé 0 selon l'invention. Le procédé d'émission multiflux de $N$ flux de données alloués à $K$ utilisateurs différents est mis en oeuvre par un émetteur destiné à un système MIMO multi utilisateurs à $N_T$ antennes d'émission et $\sum_{k=1}^{K} N_{R_k}$ antennes de réception associées à $K$ récepteurs associés respectivement aux K utilisateurs. Le procédé comprend :

- la succession de deux algorithmes (0.1, 0.2) itératifs différents de calcul de $K$ matrices de précodage d'un précodeur linéaire et de $K$ matrices de décodage d'un récepteur,
- avant chaque calcul des matrices de précodage T, un calcul de poids W pour pondérer tous les flux.

Le récepteur correspondant au premier algorithme est de type MF (Matched Filter) normalisé avec une norme de Frobenius. Le deuxième algorithme itératif est initialisé par une valeur de sortie du premier algorithme itératif.

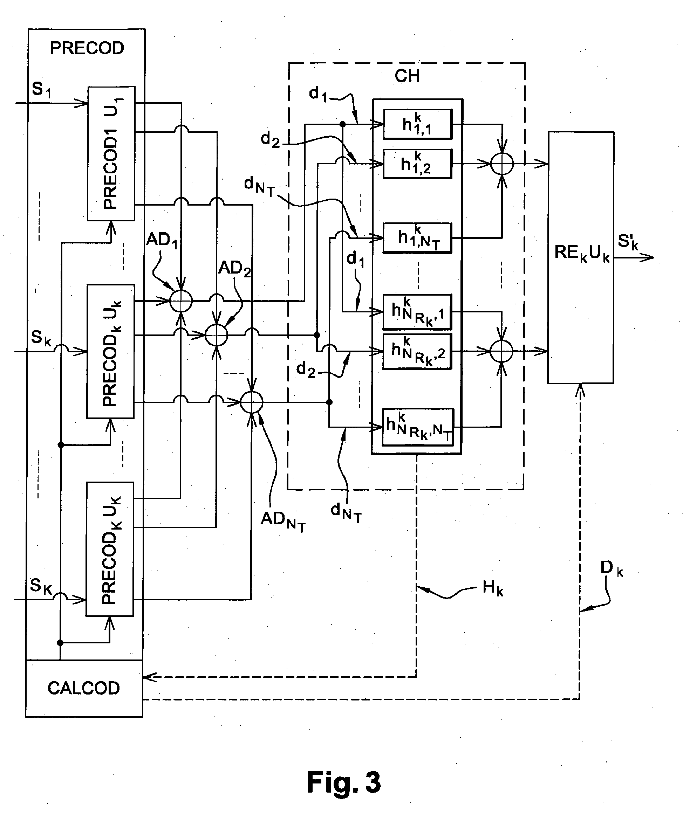

La figure 3 est un schéma détaillé du pré-codage des $N$ flux de données. Ces flux sont placés dans des vecteurs $\mathbf{s}_k$ transmis à chaque utilisateur selon le résultat d'optimisation réalisé où $\mathbf{s}_k = \mathbf{V}_k \mathbf{s}_k$. Les vecteurs $\mathbf{s}_k$ sont des vecteurs

de taille $N_{R_k} \times 1$ avec *rang* ($\mathbf{T}_k$) premiers éléments contenant les flux sélectionnés et destinés à l'utilisateur *k* et complétés par des 0. La matrice $\mathbf{V}_k$ est la matrice unitaire droite de la décomposition en valeur propre ou SVD (Singular Value Decoposition) de la matrice $\mathbf{T}_k$ selon la terminologie anglosaxonne qui permet d'écrire la matrice $\mathbf{T}_k$ sous la forme factorisée: $\mathbf{U}_k \mathbf{\Sigma}_k \mathbf{V}_k^H$, avec $\mathbf{U}_k$ la matrice unitaire contenant les vecteurs propres gauche, $\mathbf{V}_k$ la matrice unitaire des vecteurs propres droite, $\Sigma_k$ la matrice nulle à l'exception d'une diagonale qui contient les valeurs propres. Le pré-codeur PRECOD est formé de *K* pré-codeurs PRECOD$_{1,...,K}$. Les flux pour un utilisateur *k* se trouvant dans le vecteur $\mathbf{s}_k = \mathbf{V}_k \mathbf{s}_k'$ sont multipliés par la matrice d'émission $\mathbf{T}_k$ du précodeur *k*. Les composantes des vecteurs de sorties des pré-codeurs, ou vecteurs intermédiaires, sont additionnées par $N_T$ additionneurs $AD_{1,..., N_T}$ Le vecteur de sortie $d_{1,...,}d_{N_T}$ des additionneurs correspond au signal transmis sur le canal de propagation, les $N_T$ antennes d'émission ne sont pas représentées. Le canal de propagation CH est représenté par sa matrice $\mathbf{H}$. Le récepteur RE$_k$ de *l'utilisateur k* exploite $N_{R_k}$ signaux reçus par $N_{R_k}$ antennes de réception non représentées. Le signal reçu par une antenne *i* provient des $N_T$ antennes d'émission et est donc égal au signal émis $d_1,...,d_{N_T}$ pondéré par les coefficients $h_{i,1},..., h_{i,N_T}$ du canal.

Le pré-codeur comprend un module CALCOD de calcul des matrices d'émission et de réception pour les *K* utilisateurs à partir de la connaissance des coefficients $\mathbf{H}_k$ du canal de propagation pour chaque utilisateur *k*.

Contrairement aux techniques connues qui déterminent séparément les matrices initiales d'émission et de réception, le module de calcul CALCOD selon l'invention est adapté pour déterminer conjointement ces matrices initiales en mettant en oeuvre un premier algorithme itératif multi utilisateurs multi flux pour système MU-MIMO qui prend en compte l'expression générale du débit total du système MIMO multi utilisateurs SYS pour maximiser le débit total transféré à travers le canal CH.

Après plusieurs itérations, typiquement au moins trois, le module de calcul CALCOD bascule du premier algorithme itératif au deuxième algorithme itératif et utilise les matrices calculées par le premier algorithme itératif pour initialiser les valeurs des matrices du deuxième algorithme.

Ce point de basculement ou de "flip" entre algorithmes est crucial pour la convergence. En effet, changer d'un récepteur d'un premier type à un récepteur d'un deuxième type trop tôt peut mener à une mauvaise initialisation qui ne peut être corrigée par le récepteur de deuxième type et changer de récepteur trop tard peut ne pas permettre de récupérer les avantages que présente un récepteur de deuxième type. Une prise de décision du basculement effectuée de manière dynamique permet de prendre en compte la variation de la valeur optimale de la valeur de basculement en fonction de la réalisation du canal, du SNR du système et de la configuration utilisée (Nombre d'antennes à l'émission et à la réception).

Le basculement du premier algorithme au deuxième algorithme est effectué selon l'invention selon un procédé de prise de décision basé sur un critère d'arrêt. Ce procédé de prise de décision consiste à observer sur une fenêtre glissante ayant une taille de $WIN_{MF}$ préfixée l'évolution du premier algorithme en cours d'exécution. Ce premier algorithme est exécuté jusqu'à sa convergence. La convergence est déterminée par la stabilisation de la valeur du débit total *SR* sur la fenêtre d'observation. Une fois que ce premier algorithme itératif est stabilisé, et donc qu'il a convergé, le module de calcul CALCOD bascule sur le deuxième algorithme en prenant le point de convergence comme point d'initialisation (défini par le couple de matrices d'initialisation (émission, réception)) et exécute ce deuxième algorithme. En fait, l'initialisation du deuxième algorithme ne nécessite la connaissance que de la matrice d'émission. La fin de l'algorithme est définie soit par un nombre maximal d'itérations $N_{\max}^{iter}$ soit par la stabilisation du débit total *SR* du système évaluée entre itérations successives.

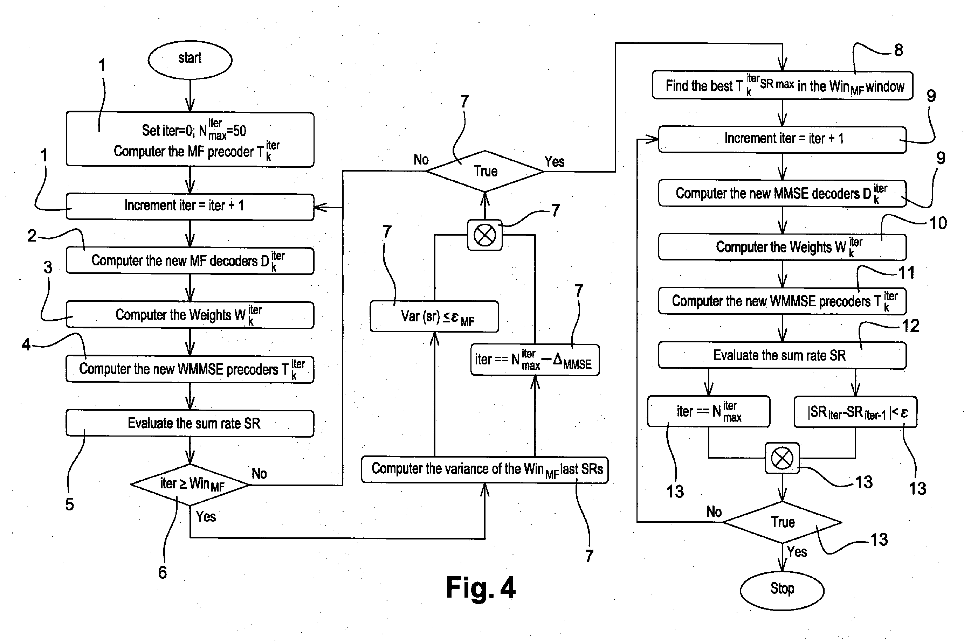

Selon un mode de réalisation préféré du procédé, le premier algorithme itératif associe un précodeur WMMSE et un récepteur MF et le deuxième algorithme associe un précodeur WMMSE et un récepteur MMSE. Le déroulement du procédé illustré par l'organigramme de la figure 4 est le suivant pour l'ensemble des *N* flux :

1/ initialisation des paramètres, $iter = 0$, $N_{\max}^{iter}$ (nombre d'itérations maximale global), $WIN_{MF}$ (fenêtre d'observation), $\varepsilon$, $\varepsilon_{MF}$ et $\Delta_{MMSE}$ (nombre minimal d'itérations du deuxième algorithme, $\Delta_{MMSE} \in \mathbb{N}^*$ et $1 \le \Delta_{MMSE} \le N_{\max}^{iter} - WIN_{MF}$) et initialisation des précodeurs. L'initialisation des précodeurs est faite en utilisant un précodeur linéaire appelé $\mathbf{T}_k^{iter}, k = 1,...,K$ de type MF donné par $\mathbf{T}_k^{iter} = b\mathbf{H}_k^H$ où *b* est un facteur de normalisation permettant de respecter la contrainte de puissance $\sum_{i=1}^{K} tr\left(\mathbf{T}_i \mathbf{T}_i^H\right) = P_T$. Après l'initialisation des précodeurs, le procédé incrémente l'indice d'itération : *iter = iter* + 1.

2/le procédé calcule les décodeurs MF $\mathbf{D}_k^{iter}$ correspondant aux précodeurs $\mathbf{T}_k^{iter-1}$ pour chaque utilisateur. Ce décodeur MF est donné par la formule :

$$\mathbf{D}_k = \frac{\left(\mathbf{H}_k \mathbf{T}_k\right)^H}{\left\|\left(\mathbf{H}_k \mathbf{T}_k\right)\right\|} \tag{1.2}.$$

où $\|\mathbf{A}\|$ représente la norme Frobenius de la matrice $\mathbf{A}$.

3/ Le procédé calcule les nouveaux poids $\mathbf{W}_k^{iter}$ en fonction des précodeurs $\mathbf{T}_k^{iter-1}$ pour tous les flux minimisant le MSE en appliquant la formule (1.4).

4/ le procédé calcule les nouveaux précodeurs $\mathbf{T}_k^{iter}$ en fonction de $\mathbf{D}_k^{iter}$ et $\mathbf{W}_k^{iter}$ avec l'équation (1.1).

5/ le procédé calcule la somme des débits $SR_{iter}$ obtenu en injectant $\mathbf{T}_k^{iter}$ dans l'équation (1.5).

6/ les étapes 2/ à 5/ sont répétées $WIN_{MF}$ fois en incrémentant à chaque fois *iter = iter* +1.

7/ le procédé vérifie la convergence de l'algorithme MF en vérifiant la contrainte

$$Var\left(\left[ SR_{iter-WIN_{MF}} \cdots SR_{iter} \right]\right) = \sum_{i=0}^{WIN_{MF}} \left( SR_{iter-i} - \frac{1}{WIN_{MF}} \sum_{i=0}^{WIN_{MF}} SR_{iter-i} \right)^2 \le \varepsilon_{MF}.$$

Si la condition est vérifiée, le procédé passe à 8/. Sinon le procédé incrémente l'indice d'itération : *iter = iter* +1 et reboucle à l'étape 2/ sauf si l'indice d'itération atteint $iter = N_{\max}^{iter} - \Delta_{MMSE}$ car dans ce cas le procédé passe à 8/.

8/ le procédé sélectionne les précodeurs qui donnent la meilleure performance dans la fenêtre $WIN_{MF}$ considérée. A cette fin, le procédé détermine la valeur maximale des débits totaux calculés sur la fenêtre $WIN_{MF}$, détermine l'itération correspondante : $iter_{SRmax}$ et les précodeurs calculés pour cette itération et les mémorise : $\mathbf{T}_k^{iter} = \mathbf{T}_k^{iter_{SR\max}}$. La sélection nécessite que le procédé sauvegarde les précodeurs calculés sur la fenêtre $WIN_{MF}$ ainsi que les *SR* correspondants.

9/ le procédé incrémente le compteur d'itérations : *iter = iter* + 1 et calcule les décodeurs MMSE $\mathbf{D}_k^{iter}$ correspondant aux précodeurs $\mathbf{T}_k^{iter-1}$ pour chaque utilisateur *k*. Ce décodeur MMSE est donné par la relation (1.3).

10/ le procédé calcule les nouveaux poids $\mathbf{W}_k^{iter}$ en fonction des précodeurs $\mathbf{T}_k^{iter-1}$ minimisant le MSE donnés par la relation (1.4).

11/ le procédé calcule les nouveaux précodeurs $\mathbf{T}_k^{iter}$ en injectant $\mathbf{W}_k^{iter}$ et $\mathbf{D}_k^{iter}$ dans la relation (1.1).

12/ le procédé calcule la somme des débits $SR_{iter}$ obtenus en injectant $\mathbf{T}_k^{iter}$ dans l'équation (1.5).

13/ les étapes 9/ à 12/ sont répétées jusqu'à convergence de l'algorithme itératif. La convergence est déterminée par la stabilisation de la valeur du débit total $|SR_{iter} - SR_{iter-1}|<\varepsilon$; ou par le dépassement d'un nombre d'itérations maximal $N_{\max}^{iter}$.

L'exemple suivant permet d'illustrer un procédé selon l'invention. Il est relatif à un système MIMO multi utilisateurs comprenant d'une part une station de base avec $N_T$ = 4 antennes d'émission et d'autre part quatre récepteurs associés respectivement à *K* = 4 utilisateurs ayant chacun $N_{Rk}$ = 4 antennes de réception. Les simulations prennent en compte des canaux de Rayleigh complètement décorrélés entre les *K* utilisateurs. Les valeurs utilisées des paramètres sont les suivantes $WIN_{MF}$ = 5, $\varepsilon$ = 10$^{-3}$, $\Delta_{MMSE}$ = 5 et $\varepsilon_{MF}$ =10$^{-3}$. Le nombre total d'itérations $N_{\max}^{iter}$ est fixé à 50.

Les performances ont ainsi été obtenues sans introduction de complexité supplémentaire par rapport à l'algorithme mono-itératif présenté dans [8]. L'évolution de la somme du débit total du système moyenné sur les réalisations du canal est représentée sur les figure 5a, 5b et 5c. Ces figures comportent les courbes des algorithmes simples itératifs "WMMSE/MMSE" et "WMMSE/MF" représentant l'algorithme itératif de [8] avec un précodeur WMMSE et respectivement un récepteur MMSE pour la première et MF pour la seconde. La courbe "WMMSE/MFMMSED" correspond à un procédé selon l'invention.

La comparaison des courbes de la figure 5a permet de constater qu'un procédé selon l'invention permet d'obtenir le meilleur des deux solutions itératives individuelles proposées dans [8]. Il permet en outre de réaliser un gain supplémentaire assez important de l'ordre de 3 bits/s/Hz par rapport à la solution WMMSE/MF à haut SNR (donné par la courbe 5c) sans pour autant pâtir des mauvaises performances de ce dernier algorithme à bas SNR illustré par la figure 5b. En effet, les courbes de la figure 5b montrent aussi un gain (même s'il est faible) par rapport au meilleur algorithme à savoir le WMMSE/MMSE.

Ces performances améliorées sont ainsi obtenues sans introduction de complexité supplémentaire par rapport à l'algorithme mono-itératif présenté dans [8]. La comparaison des courbes de l'invention avec des solutions mono flux représentées par les courbes "MMSE/Normalized MMSE", "SJNR/MSR" présentées dans [9] et "MMSE/MMSE Original" présentée dans [3] montre que même dans un système favorable à une optimisation en simple flux, les performances obtenues par l'invention sont bien meilleures. En outre, la comparaison de la courbe "WMMSE/MFMMSED" à celle de la capacité du canal obtenue avec un algorithme DPC donné en [10] montre que le procédé selon l'invention présente une courbe très proche et parallèle à celle obtenue avec un algorithme DPC et parvient de ce fait à bien séparer les flux.

Un autre exemple permet d'illustrer un procédé selon l'invention. Il est relatif à un système MIMO multi utilisateurs comprenant d'une part une station de base avec $N_T$ = 4 antennes d'émission et d'autre part deux récepteurs associés respectivement à $K$ = 2 utilisateurs ayant chacun $N_{R_k}$ = 4 antennes de réception. Les simulations prennent en compte des canaux de Rayleigh complètement décorrélés entre les $K$ utilisateurs. Les valeurs utilisées des paramètres sont les suivantes $WIN_{MF}$ = 5, $\varepsilon$ = 10$^{-3}$, $\Delta_{MMSE}$ = 5 et $\varepsilon_{MF}$ =10$^{-3}$. Le nombre total d'itérations $N_{\max}^{iter}$ est fixé à 50.

La figure 6 représente les mêmes algorithmes que ceux représentés à la figure 5. Cet exemple montre encore plus clairement les gains importants procuré par le procédé selon l'invention. En effet, la comparaison avec les solutions multiflux existantes montre que la supériorité en termes de performances est toujours confirmée. La comparaison avec les solutions simple flux montre que la supériorité devient très importante avec des pentes très différentes. Ceci peut facilement s'expliquer par les degrés de liberté du système qui sont exploités. Les solutions simple flux se focalisent sur l'optimisation d'un flux par utilisateur (dans ce cas deux flux en total) alors que le système peut en supporter plus (ici 4 flux en total).

Références :

[1] Y. Wu, J. Zhang, M. Xu, S. Zhou, Xibin Xu, "Multiuser MIMO Downlink Precoder Design Based on the Maximal SJNR Criterion," IEEE GLOBECOM 2005 proceedings, pages 2694-2698

[2] H. Wang, X. Xu, M. Zhao, W. Wu, Y. Yao, "Robust Transmission for Multiuser MIMO Downlink Systems with Imperfect CSIT," IEEE WCNC 2008, pages 340-344

[3] M. Costa, "Writing on Dirty Paper," IEEE Trans. Inf. Theory, vol. 29, no.3, pp.439-441, May 1983.

[4] G. Caire and S. Shamai, "On the achievable throughput of a multiantenna Gaussian broadcast channel," IEEE Trans. Inform. Theory, vol.49, no.7, pp.1691-1706, July 2003.

[5] J. Zhang, Y. Wu, S. Zhou, and J. Wang, "Joint linear transmitter and receiver design for the downlink of multiuser MIMO systems," IEEE Commun. Lett., vol. 9, no. 11, pp. 991993, Nov. 2005.

[6] M. Lee and S.K. Oh, "A Per-User Successive MMSE Precoding Technique in Multiuser MIMO Systems," IEEE Vehicular Technology Conference (VTC2007-Spring), page(s): 2374-2378, 22-25 April 2007.

[7] Q. H. Spencer, A. L. Swindlehurst, and M. Haardt, "Zero-forcing methods for downlink spatial multiplexing in multiuser MIMO channels," IEEE Trans. Signal Process., vol. 52, no. 2, pp. 461471, Feb. 2004.

[8] Christensen, S.S.; Agarwal, R.; de Carvalho, E.; Cioffi, J.M.; , "Weighted Sum-Rate Maximization Using Weighted MMSE for MIMO-BC Beamforming Design," Communications, 2009. ICC '09. IEEE International Conference on , vol., no., pp. 1-6, 14-18 June 2009

[9] M. Amara, Y. Yuan-Wu, and D. Slock, "Receiver and transmitter iterative optimization using maximum sum-rate criterion for multi-user MIMO systems," in ISCCSP 2010. IEEE International Symposium on Communications, Control and Signal Processing, March 2010.

[10] N. Jindal, W. Rhee, S. Jafar, and Goldsmith, "Sum power iterative water-filling for multiantenna gaussian broadcast channels," IEEE Trans. Inform. Theory, vol. 51, pp. 1570-1580, 2005.

**Revendications**

1. Procédé (0) d'émission multiflux de $N$ flux de données alloués à $K$ utilisateurs différents, mis en oeuvre par un émetteur destiné à un système MIMO multi utilisateurs à $N_T$ antennes d'émission et $\sum_{k=1}^{K} N_{R_k}$ antennes de réception associées à $K$ récepteurs associés respectivement aux K utilisateurs, **caractérisé en ce qu'**il comprend :

   - la succession de deux algorithmes (0.1, 0.2) itératifs différents de calcul de $K$ matrices de précodage d'un précodeur linéaire et de $K$ matrices de décodage d'un récepteur, ce récepteur étant de type Matched Filter, MF, normalisé avec une norme de Frobenius pour le premier algorithme, le deuxième algorithme itératif étant initialisé par une valeur de sortie du premier algorithme itératif lors du basculement du premier au deuxième algorithme, le basculement du premier algorithme au deuxième algorithme est effectué après un nombre maximal d'itérations ou selon un procédé de prise de décision basé sur un seuil de variations du débit atteint sur une fenêtre glissante donnée d'itérations de taille $WIN_{MF}$
   - avant chaque calcul des matrices de précodage, un calcul de poids pour pondérer tous les flux.

2. Procédé (0) d'émission multiflux de $N$ flux de données alloués respectivement à K utilisateurs différents selon la revendication 1, dans lequel le deuxième algorithme est adapté pour un deuxième type de récepteur présentant une variation strictement croissante du débit total.

3. Procédé (0) d'émission multiflux de $N$ flux de données alloués respectivement à $K$ utilisateurs différents, mis en oeuvre par un émetteur destiné à un système MIMO multi utilisateurs à $N_T$ antennes d'émission et $\sum_{k=1}^{K} N_{R_k}$ antennes de réception associées à $K$ récepteurs associés respectivement à $K$ utilisateurs, **caractérisé en ce qu'**il comprend :

   - une initialisation de matrices de précodage selon un précodage linéaire d'un premier type, MF
   - de manière itérative avec un minimum de $WIN_{MF}$ itérations, un calcul, prenant initialement en compte les matrices de précodage initialisé, de matrices de décodage selon un premier type de récepteur, de type MF normalisé avec une norme de Frobenius, un calcul de poids pour tous les flux pour pondérer le calcul suivant des matrices de précodage et un calcul des matrices de précodage selon un précodage linéaire d'un second type, Weighted Minimum Mean Square Error, WMMSE, en tenant compte des poids, avec un test de sortie des itérations basé sur un seuil de variations du débit atteint sur les dernières $WIN_{MF}$ itérations ou basé sur un nombre maximal d'itérations,
   - une sélection de $K$ matrices de précodage calculées sur une même itération offrant le meilleur débit total parmi les matrices de précodage calculées sur la fenêtre $WIN_{MF}$,
   - de manière itérative, un calcul des matrices de décodage selon un deuxième type de récepteur Minimum Mean Square Error, MMSE, différent du premier prenant initialement en compte les matrices de précodage sélectionnées, un calcul de poids pour tous les flux pour optimiser le calcul suivant des matrices de précodage et un calcul de matrices de précodage selon le précodage linéaire du second type, Weighted Minimum Mean Square Error WMMSE en tenant compte des poids, avec un test de sortie du calcul itératif basé sur un seuil de variations du débit entre itérations successives ou basé sur un nombre maximal d'itérations,

   et **en ce qu'**il comprend :

   - l'émission *des K* dernières matrices de décodage calculées à destination respectivement *des K* récepteurs recevant les $N$ flux,
   - le précodage des $N$ flux par les $K$ dernières matrices de précodage calculées.

4. Procédé (0) d'émission multiflux de $N$ flux de données alloués à $K$ utilisateurs différents selon la revendication 3, dans lequel le vecteur de décodage selon un deuxième type de récepteur correspond à un récepteur de type MMSE qui minimise une erreur quadratique moyenne.

5. Emetteur, EM, multiflux adapté pour un système multi utilisateurs MIMO de télécommunication comprenant $N_T$

antennes d'émission destinées à être connectées à l'émetteur, $\sum_{k=1}^{K} N_{R_k}$ antennes de réception et $K$ récepteurs associés respectivement à $K$ utilisateurs et connectés respectivement à $N_{R_k}$ parmi les $\sum_{k=1}^{K} N_{R_k}$ antennes de réception, pour émettre simultanément $N$ flux de données alloués respectivement aux $K$ utilisateurs, **caractérisé en ce que** l'émetteur comprend :

- $K$ pré-codeurs linéaires de matrices d'émission $\mathbf{T}_k$ pour générer $K$ vecteurs intermédiaires de taille $N_T \times 1$,
- par pré-codeur, un moyen de calcul (CALCOD) adapté pour :

    ∘ de manière itérative avec un minimum de $WIN_{MF}$ itérations, calculer une matrice de décodage selon un premier type de récepteur, de type MF normalisé avec une norme de Frobenius, calculer des poids pour tous les flux pour pondérer le calcul suivant dese matrices de précodage et calculer des matrices de précodage selon un précodage linéaire d'un second type, Weighted Minimum Mean Square Error WMMSE, en tenant compte des poids, avec un test de sortie des itérations basé sur un seuil de variations du débit atteint sur les dernières $WIN_{MF}$ itérations ou basé sur un nombre maximal d'itérations,
    ∘ sélectionner K matrices de précodage calculées sur une même itération offrant le meilleur débit total parmi les matrices de précodage calculées sur la fenêtre $WIN_{MF}$,
    ∘ de manière itérative, calculer des matrices de décodage selon un deuxième type de récepteur, Minimum Mean Square Error, MMSE, différent du premier prenant initialement en compte les matrices de précodage sélectionnées, calculer des poids pour tous les flux pour pondérer le calcul suivant des matrices de précodage et calculer des matrices de précodage selon le précodage linéaire du second type, WMMSE, en tenant compte des poids, avec un test de sortie du calcul itératif basé sur un seuil de variations du débit entre itérations successives ou basé sur un nombre maximal d'itérations,

- les $K$ matrices d'émission des $K$ pré-codeurs linéaires étant égales *aux K* dernières matrices de précodage calculées,
- $N_T$ additionneurs pour additionner les $K$ vecteurs $\mathbf{T}_k\mathbf{s}_k$ intermédiaires pour générer un vecteur d'alimentation des $N_T$ antennes,
- un moyen d'émission des $K$ dernières matrices de décodage calculées à destination des $K$ récepteurs.

**6.** Système (SYS) multi utilisateurs MIMO de télécommunication comprenant un émetteur (EM), $N_T$ antennes d'émission connectées à l'émetteur, $\sum_{k=1}^{K} N_{R_k}$ antennes de réception et $K$ récepteurs associés respectivement à $K$

utilisateurs et connectés respectivement à $N_{R_k}$ parmi les $\sum_{k=1}^{K} N_{R_k}$ antennes de réception, **caractérisé en ce que** :

l'émetteur est selon la revendication 5,
et **en ce que** chaque récepteur $k$ comprend :

- un moyen de réception de la matrice de décodage de flux,
- un décodeur linéaire adapté pour extraire les flux servis pour *l'utilisateur k* parmi les $N$ flux au moyen de la matrice de décodage,
- un moyen pour estimer la matrice $\mathbf{H}_k$ du canal de propagation.

**7.** Programme d'ordinateur sur un support d'informations, ledit programme comportant des instructions de programme adaptées à la mise en oeuvre d'un procédé d'émission multiflux de $N$ flux de données alloués à $K$ utilisateurs différents, mis en oeuvre par un émetteur destiné à un système multi utilisateurs MIMO à $N_T$ antennes d'émission et $\sum_{k=1}^{K} N_{R_k}$ antennes de réception associées à $K$ récepteurs associés respectivement à $K$ utilisateurs selon l'une quelconque des revendications 1 à 4, lorsque ledit programme est chargé et exécuté dans un émetteur (EM) destiné à mettre en oeuvre le procédé d'émission.

8. Support d'informations comportant des instructions de programme adaptées à la mise en oeuvre d'un procédé d'émission multiflux de $N$ flux de données alloués à $K$ utilisateurs différents, mis en oeuvre par un émetteur destiné à un système multi utilisateurs MIMO à $N_T$ antennes d'émission et $\sum_{k=1}^{K} N_{R_k}$ antennes de réception associées à $K$ récepteurs associés respectivement à K utilisateurs, selon l'une quelconque des revendications 1 à 4, lorsque ledit programme est chargé et exécuté dans un émetteur (EM) destiné à mettre en oeuvre le procédé d'émission.

**Patentansprüche**

1. Mehrstrom-Sendeverfahren (0) von K verschiedenen Benutzern zugewiesenen N Datenströmen, das von einem Sender durchgeführt wird, der für ein Mehrnutzer-MIMO-System mit $N_T$ Sendeantennen und $\sum_{k=1}^{K} N_{R_k}$ Empfangsantennen bestimmt ist, die K Empfängern zugeordnet sind, welche je den K Benutzern zugeordnet sind, **dadurch gekennzeichnet, dass** es enthält:

   - die Aufeinanderfolge von zwei verschiedenen iterativen Algorithmen (0.1, 0.2) zur Berechnung von K Vorcodiermatrizen eines linearen Vorcodierers und von K Decodiermatrizen eines Empfängers, wobei dieser Empfänger vom Typ Matched Filter, MF, ist, normiert mit einer Frobenius-Norm für den ersten Algorithmus, wobei der zweite iterative Algorithmus beim Wechsel vom ersten zum zweiten Algorithmus von einem Ausgangswert des ersten iterativen Algorithmus initialisiert wird, wobei der Wechsel vom ersten Algorithmus zum zweiten Algorithmus nach einer maximalen Anzahl von Iterationen oder gemäß einem Entscheidungsverfahren basierend auf einer Änderungsschwelle des in einem gegebenen gleitenden Fenster von Iterationen der Größe $WDN_{MF}$ erreichten Durchsatzes ausgeführt wird,
   - vor jeder Berechnung der Vorcodiermatrizen, eine Gewichtsberechnung zum Gewichten aller Ströme.

2. Mehrstrom-Sendeverfahren (0) von K verschiedenen Benutzern zugewiesenen N Datenströmen nach Anspruch 1, wobei der zweite Algorithmus für einen zweiten Empfängertyp geeignet ist, der eine strikt zunehmende Änderung des Gesamtdurchsatzes aufweist.

3. Mehrstrom-Sendeverfahren (0) von K verschiedenen Benutzern zugewiesenen N Datenströmen, das von einem Sender durchgeführt wird, der für ein Mehrnutzer-MIMO-System mit $N_T$ Sendeantennen und $\sum_{k=1}^{K} N_{R_k}$ Empfangsantennen bestimmt ist, die K Empfängern zugeordnet sind, welche je K Benutzern zugeordnet sind, **dadurch gekennzeichnet, dass** es enthält:

   - eine Initialisierung von Vorcodiermatrizen gemäß einer linearen Vorcodierung eines ersten Typs MF,
   - iterativ mit einem Minimum von $WIN_{MF}$ Iterationen, eine Berechnung, die ursprünglich die initialisierten Vorcodiermatrizen berücksichtigt, von Decodiermatrizen gemäß einem ersten Empfängertyp, vom mit einer Frobenius-Norm normierten Typ MF, eine Gewichtsberechnung für alle Ströme, um die folgende Berechnung der Vorcodiermatrizen zu gewichten, und eine Berechnung der Vorcodiermatrizen gemäß einer linearen Vorcodierung eines zweiten Typs, Weighted Minimum Mean Square Error, WMMSE, unter Berücksichtigung der Gewichte, mit einem Ausgangstest der Iterationen basierend auf einer Änderungsschwelle des in den letzten $WIN_{MF}$ Iterationen erreichten Durchsatzes oder basierend auf einer maximalen Anzahl von Iterationen,
   - eine Auswahl von K Vorcodiermatrizen, berechnet bei einer gleichen Iteration, die den besten Gesamtdurchsatz unter den Vorcodiermatrizen bieten, die im Fenster $WIN_{MF}$ berechnet wurden,

- iterativ, eine Berechnung der Decodiermatrizen gemäß einem zweiten Empfängertyp, Minimum Mean Square Error, MMSE, anders als der erste, die ursprünglich die ausgewählten Vorcodiermatrizen berücksichtigt, eine Gewichtsberechnung für alle Ströme, um die folgende Berechnung der Vorcodiermatrizen zu optimieren, und eine Berechnung von Vorcodiermatrizen gemäß der linearen Vorcodierung des zweiten Typs, Weighted Minimum Mean Square Error, WMMSE, unter Berücksichtigung der Gewichte, mit einem Ausgangstest der iterativen Berechnung basierend auf einer Änderungsschwelle des Durchsatzes zwischen aufeinanderfolgenden Iterationen oder basierend auf einer maximalen Anzahl von Iterationen,

und dass es enthält:

- das Senden der K letzten berechneten Decodiermatrizen an die K Empfänger, die die N Ströme empfangen,
- die Vorcodierung der N Ströme durch die K letzten berechneten Vorcodiermatrizen.

4. Mehrstrom-Sendeverfahren (0) von K verschiedenen Benutzern zugewiesenen N Datenströmen nach Anspruch 3, wobei der Decodiervektor gemäß einem zweiten Empfängertyp einem Empfänger des Typs MMSE entspricht, der einen mittleren quadratischen Fehler minimiert.

5. Mehrstrom-Sender, EM, geeignet für ein Mehrnutzer-MIMO-Telekommunikationssystem, der $N_T$ Sendeantennen, die dazu bestimmt sind, mit dem Sender verbunden zu werden, $\sum_{k=1}^{K} N_{R_k}$ Empfangsantennen und K Empfänger enthält, die je K Benutzern zugeordnet und je mit $N_{Rk}$ unter den $\sum_{k=1}^{K} N_{R_k}$ Empfangsantennen verbunden sind, um gleichzeitig N Datenströme zu senden, die je den K Benutzern zugewiesen sind, **dadurch gekennzeichnet, dass** der Sender enthält:

- K lineare Vorcodierer von Sendematrizen $T_k$ zur Erzeugung von K Zwischenvektoren der Größe $N_T$ x 1,
- pro Vorcodierer, eine Recheneinrichtung (CALCOD), die geeignet ist, um:

    o iterativ mit einem Minimum von $WIN_{MF}$ Iterationen eine Decodiermatrix gemäß einem ersten Empfängertyp des Typs MF, normiert mit einer Frobenius-Norm, zu berechnen, Gewichte für alle Ströme zu berechnen, um die folgende Berechnung der Vorcodiermatrizen zu gewichten und Vorcodiermatrizen gemäß einer linearen Vorcodierung eines zweiten Typs, Weighted Minimum Mean Square Error, WMMSE, unter Berücksichtigung der Gewichte zu berechnen, mit einem Ausgangstest der Iterationen basierend auf einer Änderungsschwelle des in den letzten $WIN_{MF}$ Iterationen erreichten Durchsatzes oder basierend auf einer maximalen Anzahl von Iterationen,
    o in einer gleichen Iteration berechnete K Vorcodiermatrizen auszuwählen, die den besten Gesamtdurchsatz unter den im Fenster $WIN_{MF}$ berechneten Vorcodiermatrizen bieten,
    o iterativ Decodiermatrizen gemäß einem zweiten Empfängertyp, Minimum Mean Square Error, MMSE, anders als der erste, zu berechnen, unter ursprünglicher Berücksichtigung der ausgewählten Vorcodiermatrizen, Gewichte für alle Ströme zu berechnen, um die folgende Berechnung der Vorcodiermatrizen zu gewichten, und Vorcodiermatrizen gemäß der linearen Vorcodierung des zweiten Typs, WMMSE, unter Berücksichtigung der Gewichte zu berechnen, mit einem Ausgangstest der iterativen Berechnung basierend auf einer Änderungsschwelle des Durchsatzes zwischen aufeinanderfolgenden Iterationen oder basierend auf einer maximalen Anzahl von Iterationen,

- wobei die K Sendematrizen der K linearen Vorcodierer gleich den K letzten berechneten Vorcodiermatrizen sind,
- $N_T$ Addierglieder, um die K Zwischenvektoren $T_k s_k$ zu addieren, um einen Versorgungsvektor der $N_T$ Antennen zu erzeugen,
- eine Sendeeinrichtung der K letzten berechneten Decodiermatrizen an die K Empfänger.

6. Mehrnutzer-MIMO-Telekommunikationssystem (SYS), das einen Sender (EM), $N_T$ mit dem Sender verbundene Sendeantennen, $\sum_{k=1}^{K} N_{R_k}$ Empfangsantennen und K Empfänger enthält, die je K Benutzern zugeordnet und je

mit $N_{R_k}$ unter den $\sum_{k=1}^{K} N_{R_k}$ Empfangsantennen verbunden sind, **dadurch gekennzeichnet, dass**:

der Sender gemäß Anspruch 5 ist,
und dass jeder Empfänger k enthält:

- eine Empfangseinrichtung der Decodiermatrix von Strömen,
- einen linearen Decodierer, der geeignet ist, um die zugeteilten Ströme für den Benutzer k unter den N Strömen mittels der Decodiermatrix zu entnehmen,
- eine Einrichtung, um die Matrix $H_k$ des Ausbreitungskanals zu schätzen.

7. Computerprogramm auf einem Datenträger, wobei das Programm Programmanweisungen aufweist, die für die Durchführung eines Mehrstrom-Sendeverfahrens von K verschiedenen Benutzern zugewiesenen N Datenströmen geeignet sind, durchgeführt von einem Sender, der für ein Mehrnutzer-MIMO-System mit $N_T$ Sendeantennen und

$\sum_{k=1}^{K} N_{R_k}$ Empfangsantennen bestimmt ist, die K Empfängern zugeordnet sind, die je K Benutzern zugeordnet sind, nach einem der Ansprüche 1 bis 4, wenn das Programm in einen Sender (EM) geladen und dort ausgeführt wird, der dazu bestimmt ist, das Sendeverfahren durchzuführen.

8. Datenträger, der Programmanweisungen aufweist, die für die Durchführung eines Mehrstrom-Sendeverfahrens von K verschiedenen Benutzern zugewiesenen N Datenströmen geeignet sind, durchgeführt von einem Sender, der für ein Mehrnutzer-MIMO-System mit $N_T$ Sendeantennen und $\sum_{k=1}^{K} N_{R_k}$ Empfangsantennen bestimmt ist, die K Empfängern zugeordnet sind, die je K Benutzern zugeordnet sind, nach einem der Ansprüche 1 bis 4, wenn das Programm in einen Sender (EM) geladen und dort ausgeführt wird, der dazu bestimmt ist, das Sendeverfahren durchzuführen.

**Claims**

1. Method (0) of multistream transmission of N data streams allocated to *K* different users, implemented by a transmitter intended for a multiuser MIMO system with $N_T$ transmission antennas and $\sum_{k=1}^{K} N_{R_k}$ reception antennas associated with *K* receivers associated respectively with the *K* users, **characterized in that** it comprises:

- the succession of two different iterative algorithms (0.1, 0.2) for calculating *K* precoding matrices for a linear precoder and *K* decoding matrices for a receiver, this receiver being of matched filter type, MF, normalized with a Frobenius norm for the first algorithm, the second iterative algorithm being initialized by an output value of the first iterative algorithm when toggling from the first to the second algorithm, the toggling from the first algorithm to the second algorithm is performed after a maximum number of iterations or according to a decision-taking method based on a threshold of variations of the bitrate attained over a given sliding window of iterations of size $WIN_{MF}$,
- before each calculation of the precoding matrices, a weight calculation for weighting all the streams.

2. Method (0) of multistream transmission of *N* data streams allocated respectively to *K* different users according to Claim 1, in which the second algorithm is suitable for a second type of receiver exhibiting a strictly increasing variation of the total bitrate.

3. Method (0) of multistream transmission of $N$ data streams allocated respectively to $K$ different users, implemented by a transmitter intended for a multiuser MIMO system with $N_T$ transmission antennas and $\sum_{k=1}^{K} N_{R_k}$ reception antennas associated with $K$ receivers associated respectively with $K$ users, **characterized in that** it comprises:

    - an initialization of precoding matrices according to a linear precoding of a first type, MF,
    - in an iterative manner with a minimum of $WIN_{MF}$ iterations, a calculation, initially taking into account the initialized precoding matrices, of decoding matrices according to a first type of receiver, of MF type normalized with a Frobenius norm, a weight calculation for all the streams for weighting the following calculation of the precoding matrices and a calculation of the precoding matrices according to a linear precoding of a second type, Weighted Minimum Mean Square Error, WMMSE, by taking account of the weights, with an iterations output test based on a threshold of variations of the bitrate attained over the last $WIN_{MF}$ iterations or based on a maximum number of iterations,
    - a selection of $K$ precoding matrices calculated over one and the same iteration offering the best total bitrate out of the precoding matrices calculated over the window $WIN_{MF}$,
    - in an iterative manner, a calculation of the decoding matrices according to a second type of receiver, Minimum Mean Square Error, MMSE, different from the first initially taking into account the selected precoding matrices, a weight calculation for all the streams for optimizing the following calculation of the precoding matrices and a calculation of precoding matrices according to the linear precoding of the second type, Weighted Minimum Mean Square Error, WMMSE, by taking account of the weights, with an output test of the iterative calculation based on a threshold of variations of the bitrate between successive iterations or based on a maximum number of iterations, and **in that** it comprises:
    - the transmission of the last $K$ decoding matrices calculated destined respectively for the $K$ receivers receiving the $N$ streams,
    - the precoding of the $N$ streams by the last $K$ precoding matrices calculated.

4. Method (0) of multistream transmission of $N$ data streams allocated to $K$ different users according to Claim 3, in which the decoding vector according to a second type of receiver corresponds to a receiver of MMSE type which minimizes a mean square error.

5. Multistream transmitter, MT, suitable for a MIMO multiuser telecommunication system comprising $N_T$ transmission antennas intended to be connected to the transmitter, $\sum_{k=1}^{K} N_{R_k}$ reception antennas and $K$ receivers associated respectively with $K$ users and connected respectively to $N_{R_k}$ out of the $\sum_{k=1}^{K} N_{R_k}$ reception antennas, for simultaneously transmitting $N$ data streams allocated respectively to the $K$ users, **characterized in that** the transmitter comprises:

    - $K$ linear precoders of transmission matrices $\mathbf{T}_k$ for generating $K$ intermediate vectors of size $N_T \times 1$,
    - per precoder, a calculation means (CALCOD) suitable for:

        ∘ in an iterative manner with a minimum of $WIN_{MF}$ iterations, calculating a decoding matrix according to a first type of receiver, of MF type normalized with a Frobenius norm, calculating weights for all the streams for weighting the following calculation of the precoding matrices and calculating precoding matrices according to a linear precoding of a second type, Weighted Minimum Mean Square Error, WMMSE, by taking account of the weights, with an iterations output test based on a threshold of variations of the bitrate attained over the last $WIN_{MP}$ iterations or based on a maximum number of iterations,
        ∘ selecting $K$ precoding matrices calculated over one and the same iteration offering the best total bitrate out of the precoding matrices calculated over the window $WIN_{MF}$,
        ∘ in an iterative manner, calculating decoding matrices according to a second type of receiver, Minimum Mean Square Error, MMSE, different from the first initially taking into account the selected precoding matrices, calculating weights for all the streams for weighting the following calculation of the precoding matrices and calculating precoding matrices according to the linear precoding of the second type, WMMSE, by taking account of the weights, with an output test of the iterative calculation based on a threshold of variations of the bitrate between successive iterations or based on a maximum number of iterations,

- the $K$ transmission matrices of the $K$ linear precoders being equal to the last $K$ precoding matrices calculated,
- $N_T$ adders for adding together the $K$ intermediate vectors $T_k s_k$ to generate a feed vector for the $N_T$ antennas,
- a means for transmitting the last $K$ decoding matrices calculated destined for the $K$ receivers.

6. MIMO multiuser telecommunication system (SYS) comprising a transmitter (MT), $N_T$ transmission antennas connected to the transmitter, $\sum_{k=1}^{K} N_{R_k}$ reception antennas and $K$ receivers associated respectively *with K users and* connected respectively to $\boldsymbol{N_{R_k}}$ out of the $\sum_{k=1}^{K} N_{R_k}$ reception antennas, **characterized in that**:

the transmitter is according to Claim 5, and **in that** each receiver $k$ comprises:

- a means for receiving the stream decoding matrix,
- a linear decoder suitable for extracting the streams served for the user $k$ out of the $N$ streams by means of the decoding matrix,
- a means for estimating the matrix $\mathbf{H}_k$ of the propagation channel.

7. Computer program on an information medium, said program comprising program instructions suitable for the implementation of a method of multistream transmission of $N$ data streams allocated to $K$ different users, implemented by a transmitter intended for a MIMO multiuser system with $N_T$ transmission antennas and $\sum_{k=1}^{K} N_{R_k}$ reception antennas associated with $K$ receivers associated respectively with $K$ users according to any one of Claims 1 to 4, when said program is loaded and executed in a transmitter (MT) intended to implement the transmission method.

8. Information medium comprising program instructions suitable for the implementation of a method of multistream transmission of $N$ data streams allocated to $K$ different users, implemented by a transmitter intended for a MIMO multiuser system with $N_T$ transmission antennas and $\sum_{k=1}^{K} N_{R_k}$ reception antennas associated with $K$ receivers associated respectively with $K$ users, according to any one of Claims 1 to 4, when said program is loaded and executed in a transmitter (MT) intended to implement the transmission method.

**Fig. 1**

**Fig. 2**

**Fig. 3**

EP 2 619 923 B1

start

1 — Set iter=0; $N_{max}^{iter}$=50
Computer the MF precoder $T_k^{iter}$

1 — Increment iter = iter + 1

2 — Computer the new MF decoders $D_k^{iter}$

3 — Computer the Weights $W_k^{iter}$

4 — Computer the new WMMSE precoders $T_k^{iter}$

5 — Evaluate the sum rate SR

iter ≥ $Win_{MF}$  — No / Yes

6

Computer the variance of the $Win_{MF}$ last SRs

7 — Var (sr) ≤ $\varepsilon_{MF}$

7 — iter == $N_{max}^{iter} - \Delta_{MMSE}$

7 — ⊗

7 — True — No / Yes

8 — Find the best $T_k^{iter}$SR max in the $Win_{MF}$window

9 — Increment iter = iter + 1

9 — Computer the new MMSE decoders $D_k^{iter}$

10 — Computer the Weights $W_k^{iter}$

11 — Computer the new WMMSE precoders $T_k^{iter}$

12 — Evaluate the sum rate SR

13 — iter == $N_{max}^{iter}$

13 — $|SR_{iter}-SR_{iter-1}|< \varepsilon$

13 — ⊗

13 — True — No / Yes

Stop

**Fig. 4**

Fig. 5a

Fig. 5b

Fig. 5c

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. WU ; J. ZHANG ; M. XU ; S. ZHOU ; XIBIN XU.** Multiuser MIMO Downlink Precoder Design Based on the Maximal SJNR Criterion. *IEEE GLOBECOM 2005 proceedings,* 2005, 2694-2698
- **H. WANG ; X. XU ; M. ZHAO ; W. WU ; Y. YAO.** Robust Transmission for Multiuser MIMO Downlink Systems with Imperfect CSIT. *IEEE WCNC,* 2008, 340-344
- **M. COSTA.** Writing on Dirty Paper. *IEEE Trans. Inf. Theory,* Mai 1983, vol. 29 (3), 439-441
- **G. CAIRE ; S. SHAMAI.** On the achievable throughput of a multiantenna Gaussian broadcast channel. *IEEE Trans. Inform. Theory,* Juillet 2003, vol. 49 (7), 1691-1706
- **J. ZHANG ; Y. WU ; S. ZHOU ; J. WANG.** Joint linear transmitter and receiver design for the downlink of multiuser MIMO systems. *IEEE Commun. Lett.,* Novembre 2005, vol. 9 (11), 991993
- **M. LEE ; S.K. OH.** A Per-User Successive MMSE Precoding Technique in Multiuser MIMO Systems. *IEEE Vehicular Technology Conference (VTC2007-Spring),* 22 Avril 2005, 2374-2378

- **Q. H. SPENCER ; A. L. SWINDLEHURST ; M. HAARDT.** Zero-forcing methods for downlink spatial multiplexing in multiuser MIMO channels. *IEEE Trans. Signal Process.,* Février 2004, vol. 52 (2), 461471
- **CHRISTENSEN, S.S. ; AGARWAL, R. ; DE CARVALHO, E. ; CIOFFI, J.M.** Weighted Sum-Rate Maximization Using Weighted MMSE for MIMO-BC Beamforming Design. *Communications, 2009. ICC '09. IEEE International Conference on,* 14 Juin 2009, 1-6
- **M. AMARA ; Y. YUAN-WU ; D. SLOCK.** Receiver and transmitter iterative optimization using maximum sum-rate criterion for multi-user MIMO systems. *ISCCSP 2010. IEEE International Symposium on Communications, Control and Signal Processing,* Mars 2010
- **N. JINDAL ; W. RHEE ; S. JAFAR ; GOLDSMITH.** Sum power iterative water-filling for multiantenna gaussian broadcast channels. *IEEE Trans. Inform. Theory,* 2005, vol. 51, 1570-1580